# EUROPEAN PATENT APPLICATION

(11) **EP 4 671 136 A1**
(43) Date of publication of application: **31.12.2025**
(21) Application number: 24760081.0
(22) Date of filing: 01.02.2024
(51) Int. Cl.: B64U 30/16, B64C 3/56, B64U 10/25, B64U 20/50, B64U 30/40

(54) **UNMANNED AIRCRAFT**

(30) Priority: 24.02.2023 JP 2023027643
(71) Applicant: Kawasaki Motors, Ltd., Akashi, Hyogo 673-8666 (JP)
(72) Inventor: FURUHASHI, Kenichi, 673-8666 Akashi-shi, Hyogo (JP)
(74) Representative: Witte, Weller & Partner Patentanwälte mbB
(86) International application number: PCT/JP2024/003359
(87) International publication number: WO 2024/176774

(57) **Abstract**

Provided is an unmanned aircraft that is reduced in size in an accommodated state and is easily simplified in structure. The unmanned aircraft includes: a body extending in a front-rear direction; a fixed wing connected to the body and including a right wing portion and a left wing portion; and a rotation support that supports the fixed wing with respect to the body such that the fixed wing is angularly displaced between a flying state and the accommodated state.

## Description

### Technical Field

The present disclosure relates to an unmanned aircraft.

### Background Art

PTL 1 discloses an aircraft which can change its shape between an accommodated state and a flying state. According to this aircraft, in the accommodated state, wings are rotationally displaced relative to a body as compared to the flying state.

### Citation List

### Patent Literature

PTL 1: U.S. Patent No. 6056237, DESCRIPTION

### Summary of Invention

### Technical Problem

The aircraft disclosed in PTL 1 includes: a rotation support portion that rotatably supports a left wing; and a rotation support portion that rotatably supports a right wing. Since the rotation support portions are provided for the respective wings, the number of rotation support portions increases. Therefore, the structure tends to become complex.

An object of the present disclosure is to provide an unmanned aircraft which is reduced in size in an accommodated state and easily simplified in structure.

### Solution to Problem

An unmanned aircraft of the present disclosure includes: a body extending in a front-rear direction of the unmanned aircraft; a fixed wing connected to the body and including a right wing portion and a left wing portion; and a rotation support that supports the fixed wing with respect to the body such that the fixed wing is angularly displaced between a flying state and an accommodated state.

### Advantageous Effects of Invention

According to the present disclosure, since the fixed wing is angularly displaced relative to the body, a space volume necessary to accommodate the entire unmanned aircraft can be reduced. Moreover, the unmanned aircraft includes the common rotation support portion for the fixed wing including the right wing portion and the left wing portion. Therefore, as compared to when the unmanned aircraft includes the rotation support portion for the right wing portion and the rotation support portion for the left wing portion, the number of rotation support portions can be reduced, and therefore, the number of parts of the entire aircraft can be reduced.

### Brief Description of Drawings

FIG. 1 is a plan view showing a flying state of an unmanned aircraft according to an embodiment.
FIG. 2 is a front view showing the flying state of the unmanned aircraft.
FIG. 3 is a perspective view showing a connection structure of a main wing.
FIG. 4 is a perspective view showing a connection structure of an empennage.
FIG. 5 is a plan view showing a transformation process from the flying state to an accommodated state.
FIG. 6 is a side view showing the accommodated state of the unmanned aircraft.
FIG. 7 is a front view showing the accommodated state of the unmanned aircraft.

### Description of Embodiments

Hereinafter, an unmanned aircraft according to an embodiment will be described with reference to the attached drawings. In the present specification, a direction in which a main wing extends relative to a body in a flying state is a left-right direction. Moreover, an upper direction is a direction in which lift is generated at a main wing. A front direction is a direction in which the unmanned aircraft advances by propulsive force. Moreover, in the present specification, a state of a shape of the unmanned aircraft that can fly is referred to as the "flying state." In the following description, the unmanned aircraft may be simply called an aircraft.

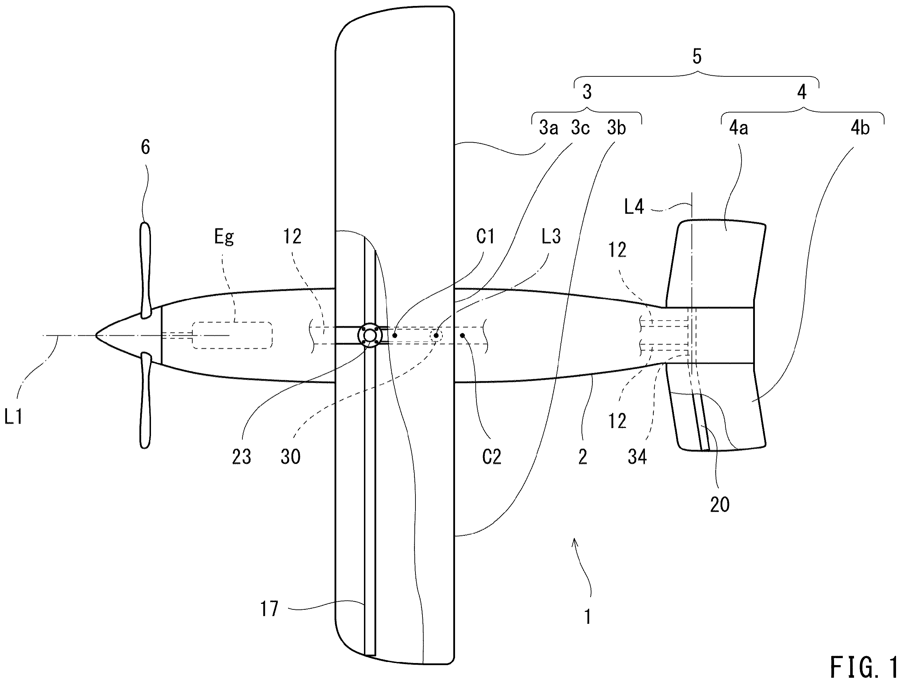

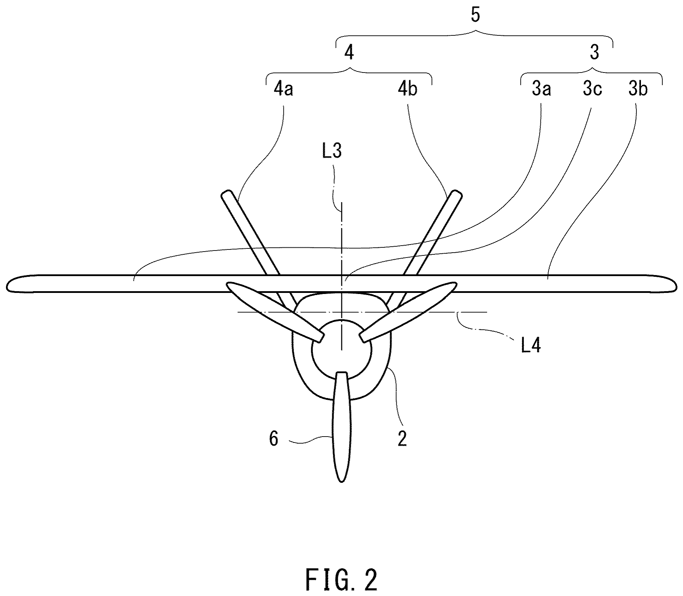

FIG. 1 is a plan view showing an unmanned aircraft 1 in the flying state according to the embodiment. FIG. 2 is a front view showing the unmanned aircraft in the flying state. The unmanned aircraft 1 of the present embodiment includes a body 2, a main wing 3, an empennage 4, and a propulsor. The propulsor generates force that makes the unmanned aircraft 1 advance forward during flight. In the present embodiment, the propulsor includes a propeller 6 and an engine Eg that rotates the propeller 6.

The main wing 3 and the empennage 4 are maintained in a fixed state relative to the body 2 during the flight. Therefore, the main wing 3 and the empennage 4 serve as a fixed wing 5. The fixed wing 5 is located separately from the propulsor. The fixed wing 5 has such an airfoil shape that generates lift when the unmanned aircraft 1 advances with the fixed wing 5 fixed to the body 2. The main wing 3 of the fixed wing 5 generates the lift that makes the aircraft ascend. The empennage 4 of the fixed wing 5 generates the lift related to the stability and control of the aircraft. As above, in the present embodiment, the fixed wing 5 includes the main wing 3 and the empennage 4.

The body 2 serves as a connection portion that connects the main wing 3 and the empennage 4. In the present embodiment, the body 2 includes therein an accommodating space, and at least part of the propulsor is accommodated in this accommodating space. In the present embodiment, the body 2 extends long in a front-rear direction. To be specific, a dimension of the body 2 in the front-rear direction is larger than a dimension of the body 2 in a width direction. The body 2 has a tubular shape extending in the front-rear direction. The propeller 6 is located at a front end portion of the body 2. A rotation shaft of the propeller 6 extends in the front-rear direction through a left-right central axis L1 that extends in the front-rear direction through a left-right center of the body 2. The body 2 accommodates the engine Eg as a propulsion source at a position in front of a front-rear center C1 of the main wing 3. For example, the engine Eg may be located in front of a front end of the main wing in the flying state.

The main wing 3 is in connection with the body 2. A longitudinal direction of the main wing 3 extends in the left-right direction that is a direction orthogonal to an upper-lower axis and a front-rear axis in the flying state. The main wing 3 includes: a right wing portion 3a projecting rightward beyond the body 2 in the flying state; a left wing portion 3b projecting leftward beyond the body 2 in the flying state; and a coupling portion 3c. The coupling portion 3c is a portion that couples the right wing portion 3a and the left wing portion 3b and is in connection with the body 2. In the present embodiment, the right wing portion 3a, the left wing portion 3b, and the coupling portion 3c denote respective regions, and the main wing 3 is realized by a single object. In the present embodiment, the coupling portion 3c is located right above the body 2. Moreover, in the present embodiment, in the flying state, a dimension of the main wing 3 in the left-right direction is larger than a dimension of the main wing 3 in the front-rear direction. As above, the main wing 3 that includes the right wing portion 3a and the right wing portion 3b and is of a left-right integrated type is in connection with an upper portion of the body 2.

In the flying state, the front-rear center C1 of the main wing 3 is located at a position that is offset from a front-rear center C2 of the body 2 in the front-rear direction. Specifically, the front-rear center C1 of the main wing 3 is located in front of the front-rear center C2 of the body 2. The main wing 3 is located bilaterally symmetrically with respect to a left-right center line of the body 2. To be specific, the amount of projection of the main wing 3 to the right side from the body 2 and the amount of projection of the main wing 3 to the left side from the body 2 are equal to each other.

FIG. 1 shows an internal structure by showing part of the main wing 3 by a break line. A main wing spar 17 that serves as a backbone of the structure of the main wing 3 extends in the longitudinal direction in the main wing 3. The main wing spar 17 supports the lift that makes the aircraft ascend and also supports the own weight of the main wing 3. The structural strength of the entire aircraft is kept by strongly fixing the main wing spar 17 to a frame 12 of the body 2. For example, the spar 17 of the main wing 3 may be configured by a single pipe that penetrates an internal space of an outer shell portion of the right wing portion 3a and an internal space of an outer shell portion of the left wing portion 3b. In the present embodiment, the spar 17 of the main wing 3 is located at a position that is offset from the front-rear center C1 of the main wing 3 in the front-rear direction in the flying state. Specifically, the spar 17 of the main wing 3 is located at a position in front of the front-rear center C1 of the main wing 3.

In the present embodiment, the empennage 4 includes: a right empennage portion 4a projecting rightward from the body 2; and a left empennage portion 4b projecting leftward from the body 2. Each of the empennage portions 4a and 4b extends outward in the left-right direction as it extends upward from the body 2. Therefore, as shown in FIG. 2, in a front view of the unmanned aircraft 1 in the flying state, the right empennage portion 4a and the left empennage portion 4b are located in a V shape and are in connection with the body 2.

The empennage portions 4a and 4b are located bilaterally symmetrically with respect to the left-right center line of the body 2. The empennage portions 4a and 4b are in connection with respective left-right side surfaces of the body 2. Specifically, the right empennage portion 4a is fixed to a right side surface of the body 2. Similarly, the left empennage portion 4b is fixed to a left side surface of the body 2. Moreover, the empennage portions 4a and 4b are fixed to a common connection shaft 7 extending in the left-right direction.

FIG. 1 shows an internal structure of the empennage 4 that is partially broken by a break line. As the internal structure, the empennage 4 includes spars 20 extending in the left-right direction. For example, each of the spars 20 of the empennage 4 may be configured by a single pipe that penetrates an internal space of an outer shell portion of the right wing portion 4a or an internal space of an outer shell portion of the left wing portion 4b. The spars 20 of the empennage 4 support an empennage outer shell portion and suppress the deformation of the empennage 4 during the flight. In the present embodiment, the spars 20 of the empennage portions 4a and 4b are in connection with an empennage rotation support 34 located at the body 2.

In the present embodiment, the unmanned aircraft 1 includes a fixing structure that fixes the fixed wing to the body 2 so as to be switchable between a fixed state and a released state. Moreover, the unmanned aircraft 1 includes a rotation support structure that supports the fixed wing such that the fixed wing is angularly displaceable relative to the body 2 in the process in which the flying state is transformed to a below-described accommodated state. In other words, the unmanned aircraft 1 includes: a fixture that relatively fixes the fixed wing to the body 2 such that the fixed wing is releaseable; a rotation support that supports the fixed wing such that the fixed wing is angularly displaceable.

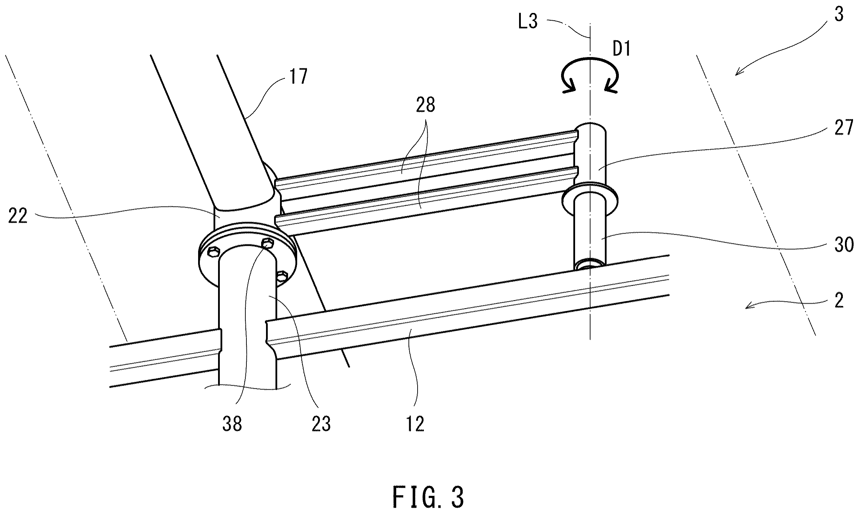

FIG. 3 shows a connection structure of the main wing 3. As the fixture, the unmanned aircraft 1 includes a main wing fixture 23 that fixes the main wing 3 such that the main wing 3 is prevented from being displaced relative to the body 2. The main wing fixture 23 is switchable between a state of preventing the relative displacement of the main wing 3 and a state of allowing the relative displacement of the main wing 3. The main wing fixture 23 relatively fixes the main wing 3 to the body 2 by being connected to a connector 22 of the main wing. In the present embodiment, an upper end portion of the main wing fixture 23 and a lower end portion of the connector 22 of the main wing are fastened to each other by bolts 38. The state between the main wing 3 and the body 2 is switchable between the fixed state and the released state by attaching or detaching the bolts 38. For example, each of a contact surface of the main wing fixture 23 of the body and a contact surface of the connector 22 of the main wing may have a flange shape that is larger than the remaining portion thereof. Thus, a load from the main wing 3 is easily transmitted to the body 2.

In the present embodiment, the main wing fixture 23 is in connection with the body frame 12 of the body 2. Moreover, the connector 22 of the main wing is in direct connection with the spar 17 of the main wing 3. As above, the main wing fixture 23 of the body and the connector 22 of the main wing realize a main wing fixing structure that fixes the main wing 3 to the body 2 such that the main wing 3 is releasable.

Each of the connector 22 of the main wing and the main wing fixture 23 of the body is located right under the spar 17 of the main wing 3 in a direction vertical to the spar 17 of the main wing 3 and is constituted by a shaft extending in the direction vertical to the spar 17 of the main wing 3. Thus, a load transmitted from the spar 17 of the main wing 3 can be transmitted to the frame 12 of the body. Moreover, as shown in FIG. 1, the main wing fixture 23 is located at a position on the left-right central axis L1 of the body 2. In other words, the main wing fixture 23 is located at a left-right intermediate position of the main wing 3. In the present embodiment, the main wing 3 and the body 2 are releasably fixed to each other at one position. Therefore, a time it takes to perform work of transforming the main wing 3 can be reduced as compared to when the main wing 3 is switched between the fixed state and the released state by plural positions.

In the flying state, the connector 22 and the main wing fixture 23 are in connection with each other, and the relative movement between the main wing 3 and the body 2 is prevented. At this time, a load received by the main wing 3 is transmitted to the body 2 through the spar 17, the connector 22, the main wing fixing structure 23, and the frame 12 of the body. Therefore, the main wing fixture 23 is designed to have such support stiffness that can support the load received by the main wing 2 in the flying state.

As shown in FIG. 3, as the rotation support, the unmanned aircraft 1 includes a main wing rotation support 30 that supports the main wing 3 such that the main wing 3 is rotatable about a main wing rotation axis L3 extending in the upper-lower direction. For example, the main wing rotation support 30 may have a pipe shape and include a bearing portion located coaxially with the main wing rotation axis L3. In this case, a rotation shaft 27 located at the main wing 3 is inserted into the rotation support 30 through a bearing. Thus, the main wing 3 is supported so as to be rotatable about the main wing rotation axis L3 in a circumferential direction D1. In the present embodiment, the main wing rotation support 30 is in connection with the body frame of the body 2. Moreover, the rotation shaft 27 of the main wing is in connection with the spar 17 through a main wing frame. As above, the rotation support 30 of the body and the rotation shaft 27 of the main wing realize a main wing rotation support structure by which the main wing 3 is angularly displaceable relative to the body 2.

The rotation support 30 is located away from the main wing fixture 23. Specifically, the rotation support 30 is located away from and behind the main wing fixture 23. Therefore, the rotation shaft 27 of the main wing is located away from and behind the spar 17 of the main wing 3. In the present embodiment, the rotation shaft 27 of the main wing is in connection with the spar 17 by a frame 28 extending in the front-rear direction. Since the spar 17 and the rotation shaft 27 are in connection with each other by the frame 28 as above, the entire main wing can be easily supported by the main wing rotation support 30. Moreover, as shown in FIG. 1, the main wing rotation support 30 is located at a position on the left-right central axis L1 of the body 2. In other words, the main wing rotation support 30 is located at a left-right intermediate position of the main wing 3.

As described below, when the flying state is switched to the accommodated state, the fixed state between the connector 22 of the main wing and the main wing fixture 23 is released, and the main wing 3 is rotated about the main wing rotation axis L3 relative to the body 2. At this time, although the main wing 3 is supported only by the main wing rotation support 30, the lift that makes the aircraft ascend during the flight is not being generated at the main wing 3. Therefore, the main wing rotation support 30 merely supports the weight of the main wing 3 which is significantly smaller than that during the flight. As above, a load applied from the main wing 3 to the body 2 when the main wing 3 is transformed so as to rotate about the main wing rotation axis L3 is smaller than that during the flight. Therefore, the main wing rotation support 30 may be designed to have such support stiffness that can support the weight of the main wing 3. In other words, the main wing rotation support 30 may be designed to have support stiffness that is lower than the support stiffness that can support the load received by the main wing 3 during the flight. Thus, since the support stiffness of the main wing rotation support 30 is made low, the rotation structure of the main wing 3 is prevented from becoming complex, and an increase in the weight of the main wing 3 can be suppressed. Moreover, the main wing rotation support 30 is located at the left-right intermediate position of the main wing 3. Therefore, even when the main wing 3 is supported only by the main wing rotation support 30, the main wing 3 is easily balanced in the left-right direction, and the generation of a bending load at the main wing rotation support 30 is easily suppressed. Moreover, since the main wing 3 and the body 2 are fixed to each other by the main wing fixture 23 in the flying state, the main wing 3 is prevented from rotating about the main wing rotation axis L3.

As shown in FIG. 1, in the present embodiment, the main wing rotation support 30 is located closer to the front-rear center C2 of the body 2 than the main wing fixture 23 is. Moreover, the main wing fixture 23 overlaps the main wing spar 17 in the upper-lower direction. Furthermore, in the flying state, the main wing rotation support 30 is located away from the spar in a direction perpendicular to the upper-lower direction. The main wing rotation support 30 is located closer to the front-rear center C2 of the body 2 than the front-rear center C1 of the main wing 3 in the flying state is. In other words, a distance between the main wing rotation support 30 and the front-rear center C2 of the body 2 is shorter than a distance between the front-rear center C1 of the main wing 3 in the flying state and the front-rear center C2 of the body 2.

The main wing fixture 23 supports a load received by the main wing 3 in the flying state. Therefore, it is preferable that the stiffness of the main wing rotation support 30 be lower than that of the main wing fixture 23. Specifically, the main wing rotation support 30 may be smaller in weight than the main wing fixture 23. As a specific example, at least one of a thickness, an inner diameter, an outer diameter, a contact area of a contact surface, or strength of the main wing rotation support 30 may be smaller than that of the main wing fixture 23. Moreover, the main wing rotation support 30 may be made of a material that is lower in strength than that of the main wing fixture 23. Furthermore, a dimension of the main wing rotation support 30 in the front-rear direction or a dimension of the main wing rotation support 30 in the left-right direction may be smaller than that of the main wing fixture 23. As above, by using both of the main wing fixture 23 and the main wing rotation support 30, the load received by the main wing 3 in the flying state is adequately supported by the main wing fixture 23, and the main wing rotation support 30 can be reduced in weight and simplified in structure.

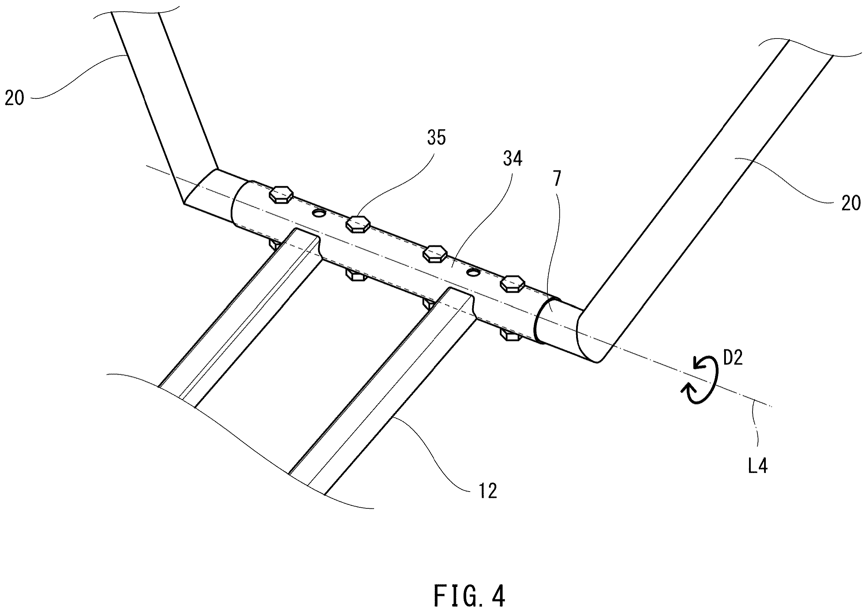

FIG. 4 shows a connection structure of the empennage 4 with respect to the body 2. As the rotation support, the unmanned aircraft 1 includes an empennage rotation support 34 that supports the empennage 4 such that the empennage 4 is rotatable about an empennage rotation axis L4 extending in the left-right direction. For example, the empennage rotation support 34 may have a pipe shape and include a bearing portion located coaxially with the empennage rotation axis L4. In this case, a rotation shaft 7 located at the empennage 4 is inserted into the empennage rotation support 34 through a bearing. Thus, the empennage 4 is supported so as to be rotatable about the empennage rotation axis L4 in a circumferential direction D2. In the present embodiment, the empennage rotation support 34 is in connection with the body frame 12 of the body 2. In the present embodiment, the rotation shaft 7 located at the empennage 4 is a portion extending from the spar 20 of the empennage 4 inward in the left-right direction. As above, the rotation support 34 of the body and the rotation shaft 7 of the empennage realize an empennage rotation support structure by which the empennage 4 is angularly displaceable relative to the body 2.

The empennage rotation support 34 is switchable between a state of allowing the angular displacement of the empennage 4 relative to the body 2 and a state of preventing the angular displacement of the empennage 4 relative to the body 2. For example, bolts 35 are used as locking pieces that prevent the relative rotation between the rotation shaft 7 of the empennage 4 and the rotation support 34. By inserting the bolts 35 in a radial direction of the rotation shaft 7, the angular displacement of the empennage 4 relative to the body 2 is prevented. Moreover, by detaching the bolts 35 that are the locking pieces, the angular displacement of the empennage 4 relative to the body 2 is allowed. Insertion positions of the bolts 35 in the flying state and insertion positions of the bolts 35 in the accommodated state are different from each other. By selecting the insertion positions of the bolts 35, the position of the empennage 4 that is prevented from being angularly displaced in the flying state and the position of the empennage 4 that is prevented from being angularly displaced in the accommodated state can be made different from each other.

More specifically, the right empennage portion 4a and the left empennage portion 4b are in connection with each other by the rotation shaft 7. The spar 20 of the right empennage portion 4a is in connection with a right end of the rotation shaft 7. The spar 20 of the left empennage portion 4b is in connection with a left end of the rotation shaft 7. The rotation shaft 7 extends in the left-right direction of the unmanned aircraft 1 so as to penetrate the body 2 in the left-right direction. Since the rotation shaft 7 that connects the empennage portions 4a and 4b is inserted into the common empennage rotation support 34, the empennage portions 4a and 4b are connected to each other so as to be angularly displaceable relative to the body 2.

According to the above configuration of the unmanned aircraft, an operator can selectively transform the unmanned aircraft between the flying state and the accommodated state suitable for accommodation depending on the situation. Specifically, the main wing 3 and the empennage 4 can be transformed relative to the body 2 to have a compact shape suitable for the accommodated state. In the present embodiment, the operator can transform the unmanned aircraft by the work of attaching and detaching the bolts 35 and 38.

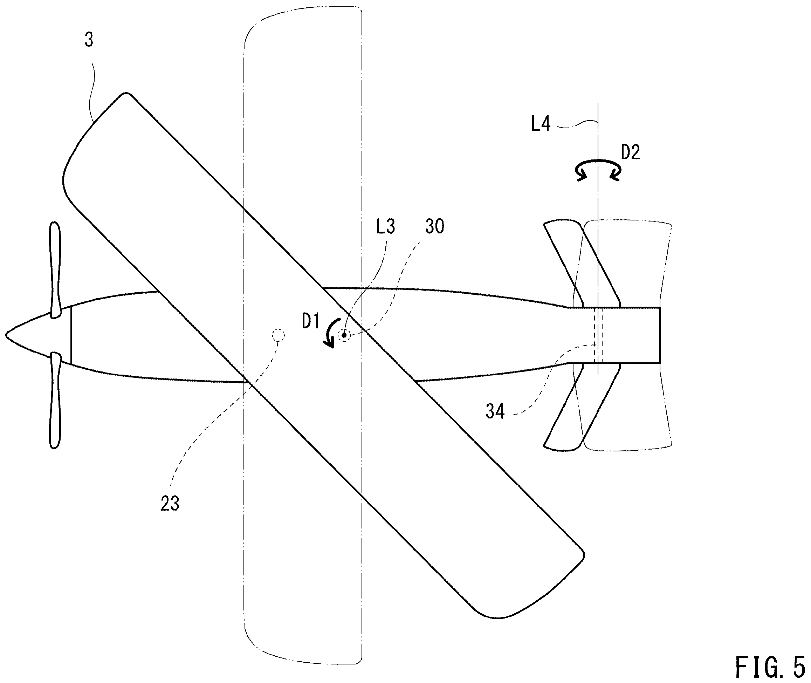

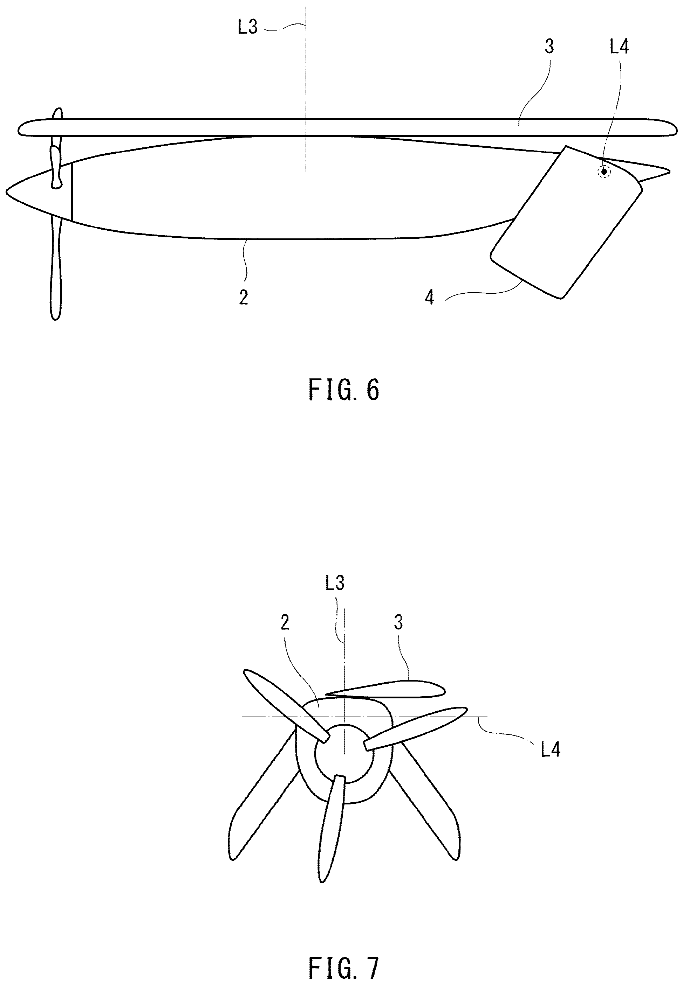

FIG. 5 shows a transformation process from the flying state to the accommodated state. The operator switches the main wing 3 and the empennage 4 to a state where the angular displacement of the main wing 3 and the angular displacement of the empennage 4 are allowed. Specifically, the bolts fixing the main wing fixture 23 and the bolts fixing the empennage rotation support 34 are removed. In a state where the rotation of the main wing 3 and the rotation of the empennage 4 are allowed as above, the operator performs the angular displacement of the main wing 3 and the angular displacement of the empennage 4. Specifically, the operator performs the angular displacement of the main wing 3 in the direction D1 about the main wing rotation axis L3 to transform the main wing 3 such that the longitudinal direction of the main wing 3 extends along the front-rear direction. In the accommodated state in the present embodiment, the longitudinal direction of the main wing 3 is parallel to the front-rear direction. Specifically, the accommodated state is a state where the angular displacement of the main wing 3 has been performed by 90° from the flying state (see FIGS. 6 and 7).

Moreover, the operator performs the angular displacement of the empennage 4 in the direction D2 about the empennage rotation axis L4 to transform the empennage 4 such that the empennage 4 is moved downward. In the present embodiment, an upper end of the empennage 4 in the flying state becomes a lower end of the empennage 4 in the accommodated state (see FIGS. 6 and 7).

By the above transformation, the amount of projection of the main wing 3 with respect to the body 2 in the left-right direction in the accommodated state is made smaller than that in the flying state, and therefore, the dimension of the entire unmanned aircraft 1 in the left-right direction can be reduced. Moreover, the amount of projection of the empennage 4 with respect to the body 2 in the upper direction in the accommodated state is made smaller than that in the flying state, and therefore, the dimension of the entire unmanned aircraft 1 in the upper-lower direction can be reduced. The unmanned aircraft 1 in the accommodated state may be made more compact than that in the flying state in such a manner that the operator performs the angular displacement of the main wing 3 and the angular displacement of the empennage 4. Therefore, the angular displacement is not limited to the above example. To be specific, in the accommodated state, the longitudinal direction of the main wing 3 and the front-rear direction of the body 2 do not necessarily have to be parallel to each other. Similarly, the upper end of the empennage 4 in the accommodated state may be located lower than that in the flying state.

As above, when the state of the unmanned aircraft 1 is changed from the flying state where the unmanned aircraft 1 can fly to the state suitable for accommodation shown in FIGS. 6 and 7, the length of the unmanned aircraft 1 in the left-right direction and the length of the unmanned aircraft 1 in the upper-lower direction can be reduced. Moreover, since the main wing rotation support 30 is located closer to the front-rear center C2 of the body 2 than the main wing fixture 23 is, the amount of projection of the main wing 3 with respect to the body 2 in the front-rear direction in the accommodated state is easily reduced. Therefore, for example, when accommodating the unmanned aircraft 1 in a predetermined space, such space necessary for accommodation is reduced. For example, the number of unmanned aircrafts 1 accommodated per unit volume can be increased. Moreover, the unmanned aircraft 1 can be easily accommodated in an accommodating space that is elongated in the longitudinal direction of the body 2. Furthermore, in the transformation process between the accommodated state and the flying state, the main wing 3 and the empennage 4 are maintained to be rotatably supported by the body 2. Thus, as compared to when the main wing 3 and the empennage 4 are detached from the body 2 and accommodated, the workload of the operator for the accommodation can be reduced, and the ease of work can be improved.

In the present embodiment, when the fixed wing 5 including the main wing 3 and the empennage 4 is displaced from the flying state to the accommodated state by the angular displacement of the fixed wing 5 relative to the body 2, the accommodation volume of the entire unmanned aircraft 1 can be made smaller than that in the flying state. Thus, the size reduction of the unmanned aircraft 1 in the accommodated state can be realized. Moreover, in the unmanned aircraft 1, the right wing portion 3a and the left wing portion 3b are rotatably supported by the common main wing rotation support 30. Furthermore, the right empennage portion 4a and the left empennage portion 4b are rotatably supported by the common empennage support 34. As above, the right wing portion and the left wing portion are rotatably supported by one rotation support. Therefore, as compared to when the right portion and the left portion are separately and rotatably supported, the number of rotation supports can be reduced, and the structure of the unmanned aircraft 1 can be simplified.

Moreover, the accommodating space for one unmanned aircraft 1 is reduced. Therefore, for example, when accommodating the unmanned aircrafts 1 in a predetermined space, the number of unmanned aircrafts 1 that can be accommodated can be increased. Thus, the cost for the accommodation of the unmanned aircrafts 1 can be reduced. Moreover, for example, when the unmanned aircrafts 1 are accommodated in respective containers or accommodating boxes, and the unmanned aircrafts 1 are transported together with the containers, the necessary size of the container or accommodating box is reduced, and the cost for the transportation of the unmanned aircraft 1 can be reduced.

Especially, the amount of projection of the main wing 3 projecting from the body 2 of the unmanned aircraft 1 in the left-right direction is reduced by the angular displacement of the main wing 3 relative to the body 2. Therefore, the unmanned aircraft 1 in the accommodated state is reduced in size, and a space necessary to accommodate the unmanned aircraft 1 in the left-right direction can be reduced in size. Moreover, the amount of projection of the empennage 4 projecting upward from the body 2 is reduced by the angular displacement of the empennage 4 relative to the body 2. Therefore, the unmanned aircraft 1 in the accommodated state is reduced in size, and a space necessary to accommodate the unmanned aircraft 1 in the upper-lower direction can be reduced in size. In addition, the space necessary to accommodate the unmanned aircraft 1 in the upper-lower direction may be further reduced in size by detaching a propeller portion. Furthermore, according to the present embodiment, both of the main wing 3 and the empennage 4 are in connection with the body 2 so as to be angularly displaceable relative to the body 2. Thus, as compared to when the angular displacement of only one of the main wing 3 and the empennage 4 is performed, the unmanned aircraft 1 in the accommodated state is easily reduced in size. Specifically, the space necessary to accommodate the unmanned aircraft 1 in both of the left-right direction and the upper-lower direction can be reduced in size. In the present embodiment, both of the main wing 3 and the empennage 4 are angularly displaceable. However, as anther embodiment, one of the main wing 3 and the empennage 4 may not be angularly displaced depending on the accommodating space.

Moreover, in the present embodiment, the unmanned aircraft 1 includes the main wing fixture 23 that fixes the main wing 3 to the body 2 in the flying state separately from the main wing rotation support 30. In other words, in the flying state, the main wing 3 is in connection with the body 2 by the main wing rotation support 30 and the main wing fixture 23 which are located at respective positions different from each other. As above, in the flying state, the main wing 3 is fixed to the body 2 by using both of the main wing rotation support 30 and the main wing fixture 23 or by mainly using the main wing fixture 23. Thus, according to the unmanned aircraft 1, the main wing 3 can be more strongly fixed to the body 2 in the flying state than in the accommodated state. As above, since the main wing fixture 23 performs a connection function of transmitting lift or resistance force, generated at the main wing 3, to the body 2 during the flight, a connection function of the main wing rotation support 30 with the main wing can be reduced, and therefore, the structure of the main wing rotation support 30 can be easily simplified.

Moreover, according to the present embodiment, the main wing rotation support 30 is located closer to the front-rear center C2 of the body 2 than the main wing fixture 23 is. Therefore, when the main wing 3 is angularly displaced about the main wing rotation support 30, the amount of projection of the main wing 3 in the accommodated state from the body 2 in the front-rear direction can be made smaller than that when the main wing 3 is angularly displaced about the main wing fixture 23. Moreover, as shown in FIG. 3, the main wing fixture 23 is located so as to overlap the main wing spar 17 in the upper-lower direction. Therefore, the load applied to the main wing 3 is easily transmitted to the body 2 through the main wing fixture 23 located close to the main wing spar 17. Thus, the load which needs to be supported by the rotation support 30 in the upper-lower direction can be reduced, and therefore, the structure of the rotation support 30 can be prevented from becoming complex.

Moreover, according to the present embodiment, the front-rear center C1 of the main wing 3 in the flying state is located away from the front-rear center C2 of the body 2 toward one side in the front-rear direction. Furthermore, the main wing rotation support 30 is located closer to the front-rear center C2 of the body 2 than the front-rear center C1 of the main wing 3 in the flying state is. In other words, in the unmanned aircraft 1, the distance between the main wing rotation support 30 and the front-rear center C2 of the body 2 is shorter than the distance between the front-rear center C1 of the main wing 3 in the flying state and the front-rear center C2 of the body 2. Thus, when the longitudinal direction of the main wing 3 extends along the front-rear direction in the accommodated state, the amount of projection of the main wing 3 projecting from the body 2 in the front-rear direction can be made smaller than that when the main wing rotation support 30 is located far from the front-rear center C2 of the body 2. For example, when the front-rear center C2 of the body 2 and the main wing rotation support 30 are located at the same position in the front-rear direction, the amount of projection of the main wing 3 in the front-rear direction in the accommodated state can be minimized.

Moreover, in the present embodiment, since there is one common empennage rotation support 34 for the right empennage portion 4a and the left empennage portion 4b, the number of rotation supports can be made smaller than that when there are the rotation support for the right empennage portion 4a and the rotation support for the left empennage portion 4b, and therefore, and the structure is easily simplified. Furthermore, the empennage rotation support 34 supports the empennage 4 such that the empennage 4 is rotatable about the empennage rotation axis L4 extending horizontally in the left-right direction. Therefore, the own weight of the empennage 4 can be more easily supported by the rotation support than when the empennage 4 is supported so as to rotate about a rotation axis including an upper-lower component.

Moreover, according to the present embodiment, the empennage rotation support 34 penetrates the body 2 in the left-right direction and couples the right empennage portion 4a and the left empennage portion 4b to each other. Therefore, the operator can perform the angular displacement of the empennage portion 4a and the angular displacement of the empennage portion 4b by a single operation. Thus, the operation is made simpler and the switching of the state can be performed more quickly than when the angular displacement of the empennage portion 4a and the angular displacement of the empennage portion 4b are separately performed. In the present embodiment, the above configurations of the main wing 3 and the empennage 4 are used as the structure of the unmanned aircraft 1. In many cases, to transport or store the unmanned aircraft 1, the unmanned aircraft 1 is required to have a structure that is transformable to the above-described accommodation structure. When using the connection structure of the main wing 3 which is realized by the main wing fixture 23 and the main wing rotation support 30, the accommodating space necessary to accommodate the unmanned aircraft 1 can be reduced in size.

The present embodiment is one form of the invention, and various modifications may be made. For example, although not shown, the unmanned aircraft 1 may include a traveling wheel used at the time of takeoff and landing. Moreover, the traveling wheel may be accommodated in the body in the flying state or the accommodated state. Moreover, the unmanned aircraft 1 may include an angular displacement preventer that prevents the angular displacement of the main wing 3 in the accommodated state. Thus, the main wing 3 in the accommodated state can be prevented from shaking during the transportation. For example, as the angular displacement preventer for the main wing 3 in the accommodated state, the unmanned aircraft 1 may include a coupler that relays and couples the main wing fixture 23 and the connector 22 of the main wing to each other.

Moreover, the main wing fixtures 23 may be located at the main wing 3. For example, the main wing fixtures 23 may be located at positions that are spaced apart from each other in the left-right direction with respect to the left-right center of the body 2. Moreover, the main wing fixtures 23 may be located so as to be spaced apart from each other in the front-rear direction of the body 2. Each of the main wing fixtures 23 is configured to be releasable as described above. Therefore, by releasing the fixed states of all the main wing fixtures 23, the main wing 3 can be angularly displaced about the main wing rotation axis L3 so as to become the accommodated state.

The main wing rotation support 30 is located on the left-right central axis L1 of the body 2. However, the present embodiment is not limited to this. For example, the main wing rotation support 30 may be located at a position that is offset from the left-right central axis L1 of the body 2 toward one side in the left-right direction. Moreover, the main wing rotation support 30 may be located at a position away from the fixing support 23 and may be suitably located in accordance with the accommodating space. For example, the main wing rotation support 30 may be located at a position behind a rear end of the main wing 3 in the flying state or may be located in front of the front end of the main wing 3 in the flying state. Moreover, for example, the main wing rotation support 30 may be located at the position of the front-rear center C2 of the body 2.

Moreover, in the above embodiment, each of the main wing rotation support 30 and the empennage rotation support 34 is structured to rotatably support the shaft located at the wing. However, the above embodiment is not limited to this, and an existing rotation support structure may be used. For example, a bearing may be located at the main wing. In this case, a support shaft located at the body is inserted into the bearing of the main wing. Other than this, as the rotation support structure of the main wing 3, a thrust bearing that supports a thrust load acting in an axial direction may be used at a shaft support portion.

Similarly, a bearing may be located at the empennage. In this case, a support shaft located at the body is inserted into the bearing of the empennage. Other than this, the rotation shafts 7 supported by the empennage rotation support 34 may be respectively located for the right empennage portion 4a and the left empennage portion 4b. Thus, the angular displacement of the empennage portion 4a and the angular displacement of the empennage portion 4b can be performed separately, and therefore, force necessary to perform the angular displacement can be reduced.

Moreover, in the above embodiment, the operator realizes the switching between the flying state of the unmanned aircraft 1 and the accommodated state of the unmanned aircraft 1 by the attaching and detaching operations of the bolts 35 and 38. However, the fixing and the releasing, i.e., the switching between the flying state and the accommodated state may be performed by using a fastening structure other than the bolts. For example, the main wing 3 and the body 2 may be detachably fixed to each other by another fastening fixing structure that uses the engagement of a cam, a latch, or the like.

Moreover, the above embodiment has described that in the flying state, the main wing fixture 23 and the main wing spar 17 overlap each other in the upper-lower direction. However, the above embodiment is not limited to this. For example, the main wing fixture 23 may be located at a position that is offset from the main wing spar 17 in the front-rear direction. For example, two main wing fixture 23 may be located so as to be spaced apart from each other in the front-rear direction about the main wing spar 17. In this case, the main wing spar 17 and the main wing fixtures 23 lined up in the front-rear direction may be fixed to each other by a connector extending downward from the main wing spar 17 in a V shape. Moreover, when the main wing spars 17 are located so as to be lined up in the front-rear direction, the main wing fixtures 23 may be located for the respective main wing spars 17. Even in this case, it is preferable that the main wing rotation support 30 be located closer to the front-rear center C2 of the body 2 than the main wing fixtures 23 are. Moreover, at least one main wing fixture 23 is located closer to the main wing spar 17 than the main wing rotation support 30 is.

The unmanned aircraft of the present embodiment is characterized by a structure in which the fixed wing is angularly displaced, and the size and weight of the unmanned aircraft are suitably selectable. For example, the unmanned aircraft of the present embodiment may be an unmanned aircraft for the transportation of goods or for the observation or photographing from the sky. Moreover, the unmanned aircraft of the present embodiment may be an unmanned aircraft for enjoying aircraft control as a hobby. To be specific, the size of the unmanned aircraft is not limited and may be such a size that a person can hold the unmanned aircraft or may be such a size that the unmanned aircraft is mounted on a truck. The engine Eg is used as a driving source of the propulsor but is not limited to this. For example, the driving source of the propulsor may be an electric motor or another driving source. Moreover, the propulsor may not be included in the unmanned aircraft when the unmanned aircraft glides from a high place or is carried to the sky by an assist means.

The present embodiment has described that the main wing 3 that is of the left-right integrated type is in connection with the upper portion of the body 2. However, the above embodiment is not limited to this. For example, the main wing 3 that is of the left-right integrated type is in connection with a lower portion of the body 2. Moreover, the main wing 3 may be located behind the front-rear center C2 of the body 2. Furthermore, the empennage 4 may be located in front of the front end of the main wing or may be located behind the rear end of the main wing. When the main wing 3 is located at a rear portion of the body 2, the main wing rotation support 30 may be located in front of the main wing 3 to reduce the size of the unmanned aircraft 1 in the accommodated state. Moreover, the present embodiment has described that the operator applies the force that performs the angular displacement of the main wing 3 and the angular displacement of the empennage 4. However, the present embodiment is not limited to this. For example, an actuator, such as an electric motor, may apply force that performs the angular displacement of at least one of the wings. Moreover, the fixed wing may be configured such that: the spar is omitted, and the deformation of the wing is prevented by an outer shell.

The foregoing has described the embodiment as an example of the technology disclosed in the present application. However, the technology in the present disclosure is not limited to this and is applicable to embodiments in which modifications, replacements, additions, omissions, and the like have been suitably made. Moreover, a new embodiment may be prepared by combining the components described in the above embodiment. For example, some of components or methods in one embodiment may be applied to another embodiment. Some components in an embodiment may be separated from the other components in the embodiment and arbitrarily extracted. Furthermore, the components shown in the attached drawings and the detailed explanations include not only components essential to solve the problems but also components for exemplifying the above technology and not essential to solve the problems.

The following aspects disclose preferred embodiments.

### First Aspect

An unmanned aircraft including:
a body extending in a front-rear direction of the unmanned aircraft;
a fixed wing connected to the body and including a right wing portion and a left wing portion; and
a rotation support that supports the fixed wing with respect to the body such that the fixed wing is angularly displaced between a flying state and an accommodated state.

### Second Aspect

The unmanned aircraft according to the first aspect, wherein:
the fixed wing includes a main wing and an empennage;
the main wing includes
   a right wing portion located at a right side of the body and
   a left wing portion located at a left side of the body;
the empennage includes
   a right wing portion located at the right side of the body and
   a left wing portion located at the left side of the body; and
the rotation support includes
   a main wing rotation support that connects the main wing to the body such that the main wing is angularly displaceable relative to the body and
   an empennage rotation support that connects the empennage to the body such that the empennage is angularly displaceable relative to the body.

### Third Aspect

The unmanned aircraft according to the first or second aspect, further including a fixture that is located away from the rotation support and fixes the fixed wing to the body.

### Fourth Aspect

The unmanned aircraft according to the third aspect, wherein in the flying state, the rotation support is located closer to a front-rear center of the body than the fixture is.

### Fifth Aspect

The unmanned aircraft according to the fourth aspect, wherein:
the fixed wing includes a spar extending in a longitudinal direction of the fixed wing; and
the fixture overlaps the spar in an upper-lower direction.

### Sixth Aspect

The unmanned aircraft according to any one of the first to fifth aspects, wherein:
the fixed wing includes a main wing; and
the rotation support includes a main wing rotation support that connects the main wing to the body such that the main wing is angularly displaceable relative to the body,
the unmanned aircraft further including a main wing fixture that is located at a different position from the rotation support and fixes the main wing to the body, wherein
the main wing rotation support is lower in support stiffness than the main wing fixture.

### Seventh Aspect

The unmanned aircraft according to any one of the first to sixth aspects, wherein:
the fixed wing includes a main wing;
the rotation support includes a main wing rotation support that connects the main wing to the body such that the main wing is angularly displaceable relative to the body;
a front-rear center of the main wing in the flying state is located away from a front-rear center of the body toward one side in the front-rear direction; and
the main wing rotation support is located closer to the front-rear center of the body than the front-rear center of the main wing in the flying state is.

### Eighth Aspect

The unmanned aircraft according to any one of the first to seventh aspects, wherein:
the fixed wing includes an empennage;
the empennage includes
   a right empennage portion located at a right side of the body and
   a left empennage portion located at a left side of the body; and
the rotation support includes one empennage rotation support that connects the empennage portions to the body such that the empennage portions are angularly displaceable relative to the body.

### Ninth Aspect

The unmanned aircraft according to the eighth aspect, wherein the empennage rotation support supports the empennage such that the empennage is rotatable relative to the body about a left-right axis.

### Tenth Aspect

The unmanned aircraft according to the ninth aspect, wherein:
the empennage includes the right empennage portion and the left empennage portion; and
the empennage rotation support penetrates the body in a left-right direction and couples the right empennage portion and the left empennage portion to each other.

### Reference Signs List

- 1: unmanned aircraft
- 2: body
- 3: main wing
- 3a: right wing portion
- 3b: left wing portion
- 4: empennage
- 4a: right empennage portion
- 4b: left empennage portion
- 17: main wing spar
- 20: empennage spar
- 23: main wing fixture
- 30: main wing rotation support
- 34: empennage rotation support
- L3: main wing rotation axis
- L4: empennage rotation axis
- C1: front-rear center of main wing in flying state
- C2: front-rear center of body

## Claims

1. An unmanned aircraft comprising:
a body extending in a front-rear direction of the unmanned aircraft;
a fixed wing connected to the body and including a right wing portion and a left wing portion; and
a rotation support that supports the fixed wing with respect to the body such that the fixed wing is angularly displaced between a flying state and an accommodated state.

2. The unmanned aircraft according to claim 1, wherein:
the fixed wing includes a main wing and an empennage;
the main wing includes
a right wing portion located at a right side of the body and
a left wing portion located at a left side of the body;
the empennage includes
a right wing portion located at the right side of the body and
a left wing portion located at the left side of the body; and
the rotation support includes
a main wing rotation support that connects the main wing to the body such that the main wing is angularly displaceable relative to the body and
an empennage rotation support that connects the empennage to the body such that the empennage is angularly displaceable relative to the body.

3. The unmanned aircraft according to claim 1 or 2, further comprising a fixture that is located away from the rotation support and fixes the fixed wing to the body.

4. The unmanned aircraft according to claim 3, wherein in the flying state, the rotation support is located closer to a front-rear center of the body than the fixture is.

5. The unmanned aircraft according to claim 4, wherein:
the fixed wing includes a spar extending in a longitudinal direction of the fixed wing; and
the fixture overlaps the spar in an upper-lower direction.

6. The unmanned aircraft according to claim 1 or 2, wherein:
the fixed wing includes a main wing; and
the rotation support includes a main wing rotation support that connects the main wing to the body such that the main wing is angularly displaceable relative to the body,
the unmanned aircraft further comprising a main wing fixture that is located at a different position from the rotation support and fixes the main wing to the body, wherein
the main wing rotation support is lower in support stiffness than the main wing fixture.

7. The unmanned aircraft according to claim 1 or 2, wherein:
the fixed wing includes a main wing;
the rotation support includes a main wing rotation support that connects the main wing to the body such that the main wing is angularly displaceable relative to the body;
a front-rear center of the main wing in the flying state is located away from a front-rear center of the body toward one side in the front-rear direction; and
the main wing rotation support is located closer to the front-rear center of the body than the front-rear center of the main wing in the flying state is.

8. The unmanned aircraft according to claim 1, wherein:
the fixed wing includes an empennage;
the empennage includes
a right empennage portion located at a right side of the body and
a left empennage portion located at a left side of the body; and
the rotation support includes one empennage rotation support that connects the empennage portions to the body such that the empennage portions are angularly displaceable relative to the body.

9. The unmanned aircraft according to claim 8, wherein the empennage rotation support supports the empennage such that the empennage is rotatable relative to the body about a left-right axis.

10. The unmanned aircraft according to claim 9, wherein:
the empennage includes the right empennage portion and the left empennage portion; and
the empennage rotation support penetrates the body in a left-right direction and couples the right empennage portion and the left empennage portion to each other.
